# EUROPEAN PATENT APPLICATION

(11) **EP 1 415 913 A1**
(43) Date of publication of application: **06.05.2004**
(21) Application number: 02380222.6
(22) Date of filing: 30.10.2002
(51) Int. Cl.: B65B 11/02, B65B 11/04, B29C 65/02

(54) **Machine and method for wrapping a plastic film around pallets**

(71) Applicant: DNC, S.A., 08480 L' AMETLLA DEL VALLES (BCN) (ES)
(72) Inventor: Alvarez, Munoz, Julian, 08480 La Ametlla Del Valles (BCN) (ES)
(74) Representative: Esteban Perez-Serrano, Maria Isabel

(57) **Abstract**

The present invention relates to a wrapping maschine and a wrapping method for wrapping a plastic film around pallets. The wrapping maschine comprises a module (3.1) adjacent to the roll carriage (3) with wheels to group the wrapping film (7) into a cord. The film cord (7) is used to provide a greater strength and stability of the winding. A special configuration is described of the soldering head, adapted to soldering of the cord (7).

## Description

### OBJECT OF THE INVENTION

The present invention relates to a baling machine with a net cord soldering header and a baling method therewith.

Said machine has a main roller platform that can revolve about a vertical axis to receive the pallet to be baled and allow its rotation to wrap the supporting net around it.

Said main platform has a clip that turns with it to hold the end of the net used in the baling.

It is also provided with a vertical column supporting a roll feeder free to move vertically.

Said net feeder head is characterised by two net gathering wheels that reduce it to a cord.

It is also characterised by a special design of the soldering header with a double body and with means allowing to ensure a cord soldering that prevents tears when removing the header from the union area.

Lastly, it is also characterised by the method for baling pallets with this machine, which establishes the sequence of operations that allow to carry out the baling process in an optimal time and stability of the wrapped assembly.

### BACKGROUND OF THE INVENTION

There are many baling machines that are commercially available and described in Patents and Utility Models.

Such records cover needs for the mobile supports, the roll bearing carriages and the attachment clips among others, in each case the designs described corresponding to specific production ranges.

Spanish Patent with publication number ES2027920 describes a baling machine based on the use of a large ring that can surround the load entirely.

Said ring allows to turn the roll about the load, allowing large productions. In this record the soldering header and the clip mechanism are static.

Spanish Patent with publication number ES2000561 also describes a baling machine in which the pallet turns on a revolving platform.

This machine allows forming wraps for protection against rain by applying a second plastic film on the top base.

The object of the invention is the specific design of the elements for feeding and cutting the plastic band.

In the baling operation it is important to consider the stability of the stacking, as a sideways load due to the tension of the wrapping film can make the pallet contents fall over.

Spanish Patent with publication number ES2114402 describes a machine specifically designed for empty boxes, which due to its modular construction allows a sequential palletisation and baling process.

Spanish Utility Model with publication number ES1023490U discloses a baling machine consisting of a gantry that incorporates the basic elements, such as the roll carriage and the attachment clip, and inside which is the platform on which the pallet is placed.

This machine uses a conventional cutting head.

All of these machines use a plastic film or a constantly spread net.

When the soldering header rests on and fuses the assembly of layered films, said fusion does not occur in a large amount of plastic material.

As it is arranged in layers, the fused area has the disadvantage of presenting many weak points because of an excessively reduced thickness due to the wrapping tension, or because when removing the soldering header part of the fused material is partially adhered to the contact surface of the header.

The present invention consists of a machine that uses a wrapping winding in a cord obtained by gathering the net, in which participate the feeder roll, guides and a soldering header specifically conceived for such a union.

### DESCRIPTION OF THE INVENTION

The present invention relates to a baling machine with a net cord soldering header and to the baling method therewith.

This machine improves the state of the art by providing a bale that is held by a strong cord using the same net employed in the wrapping.

With this object the roll carriages, the net support guides and the soldering header have all been modified.

The machine incorporates a revolving platform that is provided on its surface with a row of rollers to facilitate feeding and outlet of the pallets.

On said platform is installed a clip meant to hold the end of the net that will be wrapped around the pallet.

Said clip is attached during rotation to the revolving platform, so that after the net end has been clamped the platform rotation will wrap the net maintaining its tension.

The roll is fed from a roll carriage installed in a vertical column. The vertical displacement of said carriage is what allows wrapping of the bale in the entire height of the pallet.

The rising or lowering of the roll carriage during the rotation of the pallet establishes a helical wrap encompassing the entire height.

In this invention, the roll carriage includes a module with two wheels, one on the top edge of the net that unwinds from the roll and another on the bottom edge.

During the rotation of the pallet baling operation, said wheel are placed as far as possible without being in contact with the net.

At this time a dolly opens allowing a net to cover it in the following rotations, completing the wrap.

After a number of rotations sufficient to protect the pallet with the net and with a suitable stability, the wheels approach to make the net fed from the roller to converge in a cord.

The rotation of the pallet will wrap the cord about the load with sufficient turns to stabilise the load, depending on its nature and on the required strength.

The number of turns before opening the dolly, the number of subsequent turns, and the number of turns after the wheel close to form the cord are all controlled by a programmable robot in charge of coordinating all the actuators and sensors of the machine, which is not the object of the invention.

After the cord has been wound about the pallet with a sufficient number of turns to ensure its stability, the soldering header comes into action.

Said soldering header consists of two bodies placed on a supporting arm that extends by means of a hydraulic or pneumatic cylinder until it is placed opposite the pallet, and specifically opposite the dolly.

A first hydraulic or pneumatic cylinder approaches the first body to the dolly until it is resting against it.

Said first body is provided on its front with a support plate that presses against the end of the cord to be soldered and that is provided with openings.

The clip holding the end of the net is actuated to later initiate a new cycle.

A second body also pushed by a second cylinder bears the resistors that melt the material to be soldered with a construction such that they enter through the openings of the front support plate.

The fused volume obtained from a cord is much greater than that obtained when using an extended plastic film or net, so that the union is stronger.

The resistors press against the cord, accessible through the aforementioned openings, fusing it and establishing the union with the net placed in front of the dolly.

The soldering cylinder is provided on its side with a cutter that cuts the net, which remains held by a clip.

After the fusing operation and once the resistors have been removed several air blasts cool of the area quickly. These blasts can be obtained from a venturi type nozzle with a coolant feed that favours the cooling of the soldered union.

After it is cold the soldering header is removed and the clip holds the end of the net, with the dolly assuming its rest position.

Once again the soldering header support arm is removed, allowing the pallet to be rolled out on the rollers of the main platform and thus allow a new pallet to enter.

As described, the novel elements are the wheel group placed in the roll carriage that is meant to form the cord by approximating the wheels and bringing together the net and the soldering element comprised of two bodies.

Also part of the invention is the incorporation of these elements in configurations where their motion relative to the pallet is identical, although because of production volumes the pallet and the clip are fixed in place and the auxiliary elements such as the roller carriage and the soldering header are mobile.

### DESCRIPTION OF THE INVENTION

The description is complemented with a set of drawings illustrating a preferred embodiment and not limiting the invention.

Figure 1 shows a perspective view of the machine allowing to identify the main revolving platform, the vertical column with the roll carriage and schematically showing the soldering header on its support and the roll carriage object of the invention.

Figure 2 shows an elevation view of the machine allowing to identify the revolving platform with the pallet to be baled, the attachment clip, the net, partially eliminated to allow seeing the soldering header, and the roll carriage with the wheels for forming the cord.

Figure 3 is a perspective view of the bodies that make up the solderer of a first embodiment. Its main component elements are shown.

Figure 4 shows a second embodiment of the soldering header in an elevation view. This second soldering header separates the main body into two blocks, the block A and the block B, as its main difference with respect to the first embodiment.

Figure 5 shows a side view of the second embodiment revealing the configuration of the M-shaped guide bar that gathers the cord.

Figure 6 shows a plan view of the second embodiment revealing the cutter that is heated by the resistors.

### PREFERRED EMBODIMENTS OF THE INVENTION

The present invention relates to a baling machine with a net cord soldering header and to the baling method therewith.

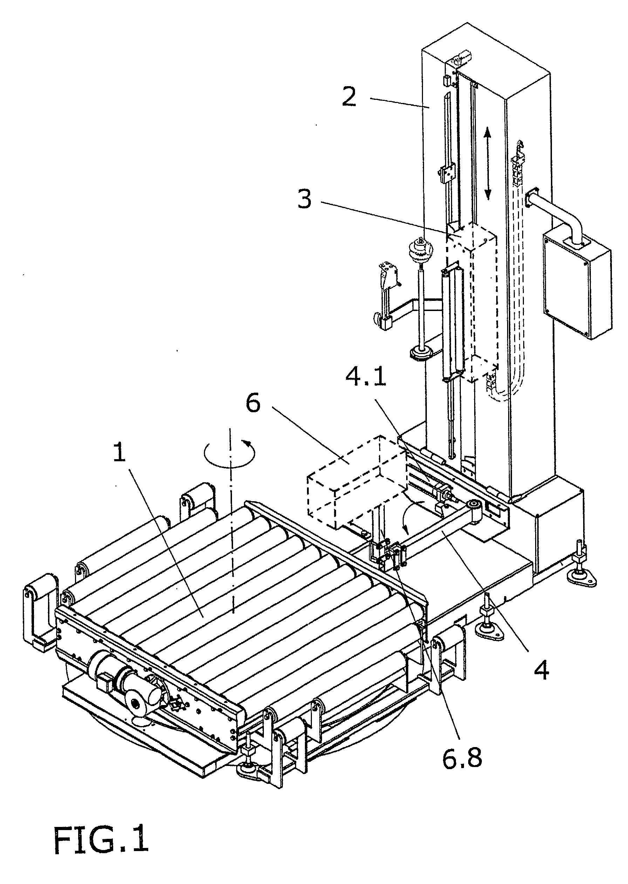

Figure 1 shows a perspective describing the preferred embodiment of a machine according to the mobile pallet configuration in which dotted line prisms emphasise the novel elements allowing baling with the last turns made with a cord that provides a great strength and stability to the pallet stacking.

The machine construction consists of a conventional revolving platform (1) on the side of which is a column (2) supporting the roll carriage (3), allowing it to move vertically in order to wrap in said vertical motion the entire height of the pallet (8).

In the space separating the vertical column (2) where the roll carriage (3) is installed and joined to the base of said column (2) is placed the arm (4) bearing the soldering header (6).

Said arm (4) extends by revolving about a vertical shaft impelled by a pneumatic or hydraulic cylinder (4.1) until it is placed opposite the pallet (8).

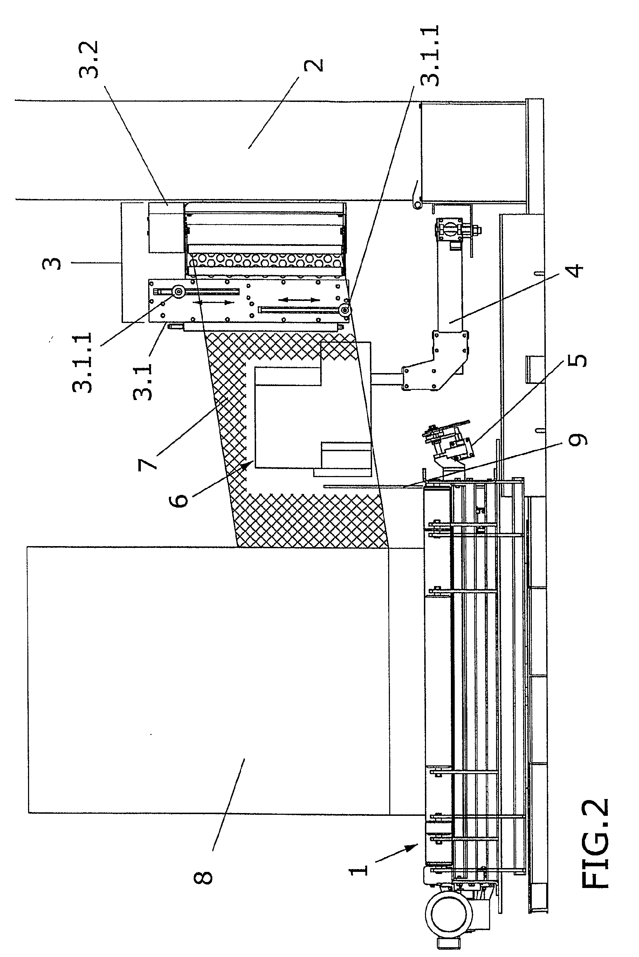

Figure 2 is an elevation view in greater detail, showing the pallet (8), the soldering header (6) and the roll carriage (3).

The roll carriage (3) mainly consists of two bodies, one (3.2) supporting the roll with the baling net (7) and another (3.1) that includes two guided wheels (3.1.1) free to move vertically to embrace the ends of the net (7) and form the cord.

Joined to the revolving platform (1) is a clip (5) meant to hold the end of the baling net (7) so that when the platform revolves it is wound around the pallet (8) maintaining its tension.

### Soldering header according to the first embodiment.

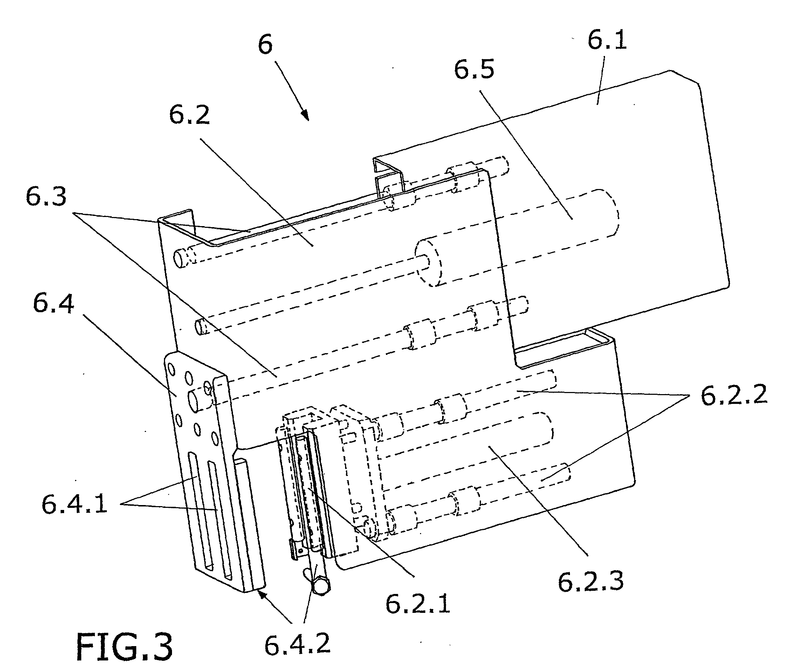

Figure 3 shows the first embodiment of the soldering header (6) in a perspective view in order to identify more clearly the various moving bodies with respect to its support (4).

The support (4) is joined to a first upper body (6.1) which will hereinafter be referred to as the fixed body.

On said support are fixed two guides (6.3) that lead a second mobile group (6.2) driven by a pneumatic or hydraulic cylinder (6.5).

The second body (6.2) is made of plate and has an elevation with two horizontal rectangular sectors, a top one and a bottom one. The latter is slightly set back towards the position of the support (4) (not shown in Figure 3).

This slight displacement of the lower sector of the mobile group (6.2) creates a space limited by a plate (6.4) that is joined to the front of the mobile group (6.2).

The plate (6.4) is meant to rest against the surface to be soldered by heat when the mobile group is actuated by the cylinder (6.5).

The plate (6.4) has a free lower segment with openings (6.4.1) that provide access to the surface to be joined by heat, on which rests a block (6.2.1) heated by resistors.

The heated block (6.2.1) is in turn free to move with respect to the second body (6.2) and free to move forward by means of guides (6.2.2) and a second pneumatic or hydraulic cylinder (6.2.3).

The heated block (6.2.1) has a front part shaped in accordance with the openings (6.4.1) of the front support plate (6.4) so that it can pass through them and reach the net cord (7) that must be fused.

On said hot block (6.2.1) is set a cutter (6.9), so that as the hot block (6.2.1) approaches to establish the union the cutter (6.9) cuts the cord (7), which has been previously held by the clip (5) for the following baling cycle.

On the same support plate (6.4) but on its rear and between openings (6.4.1) in order not to interfere with the movement of the hot block (6.2.1) are established air ducts (6.4.2) that allow a rapid cooling of the area joined by fusion.

### Soldering header according to the second embodiment.

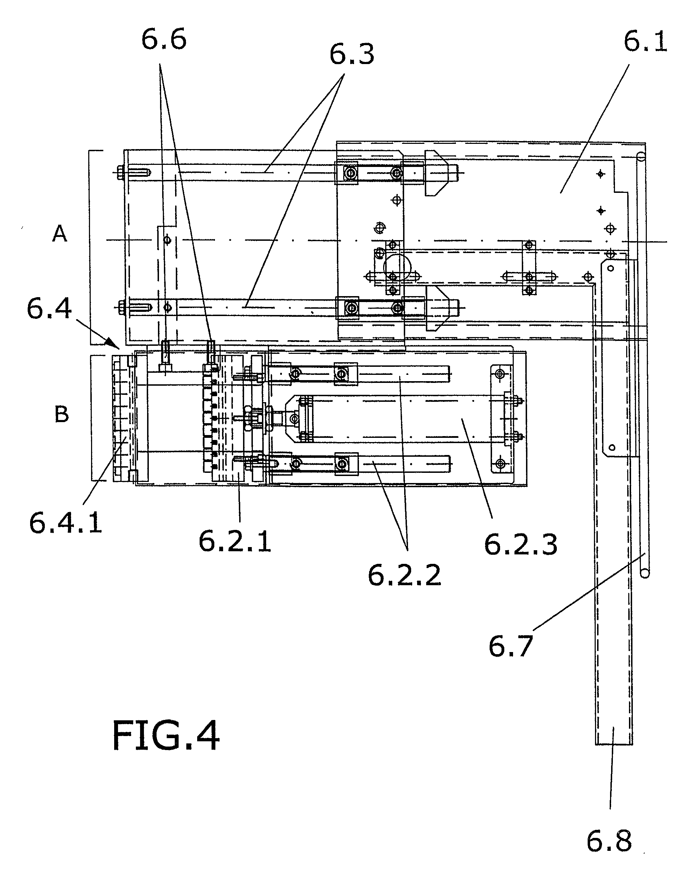

Figures 4, 5 and 6 show an elevation view, profile view and plan view of the soldering header of this second embodiment.

In this description only the few differences with respect to the first embodiment of the invention are emphasised. These figures do show the union of the soldering header with the vertical profile (6.8) that rises from the support arm (4) moving it until it is opposite the pallet.

In this second embodiment, as shown in Figure 4, the mobile body (6.2) does not only consist of a single module by a folded plate but instead has two modules joined to each other by a bolted union (6.6).

This second module makes independent the guide elements (6.2.2) and the cylinder (6.2.3) that drives the hot block (6.2.1) from the block (6.2.1) itself.

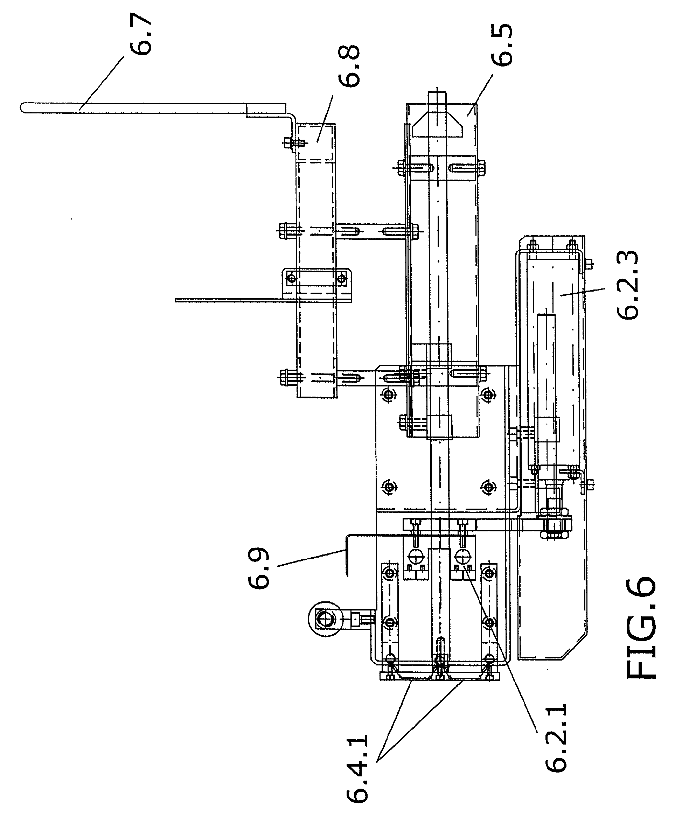

The plan view of Figure 6 shows most clearly the arrangement of the cutter (6.9), the attachment base of which is the hot block (6.2.1), so that the cutter also cuts with the temperature.

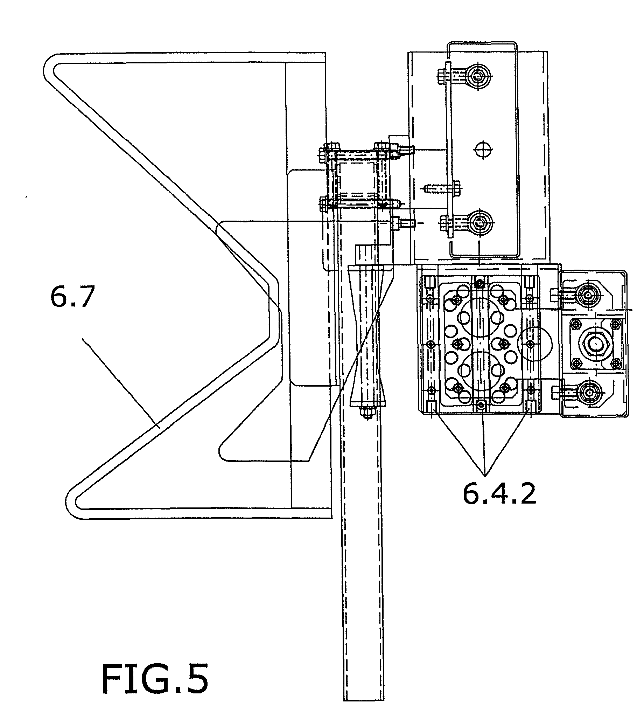

Likewise, the side view of Figure 5 also shows clearly an M-shaped guide bar (6.7) that directs the cord arriving from the roll carriage (3) to the position in which the cord passes in front of the support plate (6.4), ensuring that the front of the soldering header (6) applies the hot block to the net cord (7) and is not out of position.

This same view shows a specific configuration of the openings (6.4.1) through which emerge the projections of the hot block (6.2.1) that contact the cord to be fused.

The configuration of the openings (6.4.1) and thus of the block (6.2.1) mainly depends on the type of net (7) and the braiding shown in the baling operation.

### Baling method.

The baling operation begins with the arrival of the pallet (8) on the rollers of the main platform (1).

After it is centred and secured, the baling operation begins with the platform (1) revolving about its central vertical axis.

The clip (5) joined to the platform (1) holds the end of the net (7) and thus during the rotation keeps the net (7) tensioned, allowing it to be wound about the pallet (8).

The rotation of the main platform (1) is combined with upward and downward movements of the roll carriage head (3) so that the walls of the pallet are wrapped.

After a certain number of turns (depending on the type of stacking and the nature of the net) a dolly (9) also joined to the platform (1) rests against the wound net (7).

The platform (1) continues to turn until a second wind is effected, after which the wheels (3.1.1) of the roll carriage (3) approach each other and form a cord from the net (7) by gathering it.

The cylinder (4.1) of the soldering header support (4) acts by placing the solderer opposite the pallet (8), exactly at the position of the dolly (9), while the bar (6.7) suitably adjusts the height of the net cord (7) so that it is at the position where the soldering header (6) will act.

At this time the soldering header (6) moves its mobile body (6.2) pressing its front plate (6.4) against the net cord (7) by means of the first cylinder (6.5).

After pressing on the net cord (7) the second cylinder (6.2.3) presses the hot block (6.2.1) against the cord segment accessible through the openings (6.4.1), melting the material and joining it to the last winds placed on the dolly (9).

In this same motion the cutter (6.9) cuts the cord (7) which has been previously held by the clip (5) in order to allow the following baling cycle to take place.

The removal of the hot block (6.2.1) is followed by cooling with air injection through ducts (6.4.2) that harden the molten mass.

Lastly, the baled pallet (8) is removed.

These same operations are possible with the same relative motions by simply considering the platform (1), the clip (5) and the dolly (9) fixed and the header (6) with the roll carriage (3) free to turn, so that winding is achieved when the latter elements move around the pallet.

The essence of the invention is not affected by variations in the materials, shape, size and arrangement of the component elements, described in a non-limiting manner such that an expert in the field should be capable of reproducing the invention.

## Claims

1. Baling machine with net cord soldering header, from among machines for baling pallets by wrapping a plastic film around them and being secured by a soldered union, from among those having a main revolving platform (1) joined to a clip (5) holding the net (7), a dolly resting on the net (7) and a vertical column (2) provided with a vertically displaceable roll carriage (3), **characterised in that** it is comprised of a roll carriage (3) having an additional module (3.1) with two wheels (3.1.1) located above and below the net (7) leaving the roll carriage (3) to form the net cord (7) when said two wheels (3.1.1) approach each other, as well as having a soldering header (6) set on a supporting arm (4) that extends by means of a cylinder (4.1), which soldering header mainly consists of two bodies, a body (6.1) fixed with respect to the support (4) and a mobile body (6.2) that can move horizontally by means of two guides (6.3), driven by a pneumatic or hydraulic cylinder (6.5); in addition, said mobile body (6.2) has a front pressure plate (6.4) with openings (6.4.1) to allow passage of a block (6.2.1) heated by resistors, that is driven by a second cylinder (6.2.3) and guided by two guides (6.2.2) that are joined to the mobile body (6.2) of the soldering header (6.2).

2. Baling machine with net cord soldering header according to claim 1, **characterised in that** it is provided with a cutter (6.9) joined to the hot block (6.2.1) for cutting the cord by approximating the first mobile body (6.2) of the soldering header (6).

3. Baling machine with net cord soldering header according to claim 1, **characterised in that** it is provided with a air cooling system (6.4.2) to cool the area that has been heat soldered.

4. Baling machine with net cord soldering header according to claim 1, **characterised in that** the soldering header (6) incorporates an M-shaped bar (6.7) that guides the cord (7) towards the pressure plate (6.4) of the soldering header (6) that acts in the extended position of the soldering header (6).

5. Baling machine with net cord soldering header according to claim 1, **characterised in that** the mobile body (6.2) of the soldering header (6) is constructed as a single body with a plate folded into two horizontal rectangular sectors, a top one and a bottom one, with the bottom one being nearer the vertical support (6.8), leaving the space necessary for the displacement of the hot block (6.2.1) and with said sector housing the guides (6.2.2) for displacement of the hot block (6.2.1) and the cylinder (6.2.3) driving it; and with the pressure plate (6.4) with the openings (6.4.1) through which passes the hot block (6.2.1) being fixed to the front of the top sector of the mobile body (6.2).

6. Baling machine with net cord soldering header according to claim 1, **characterised in that** the mobile body (6.2) of the soldering header (6) is constructed as two bodies formed by two independent horizontal rectangular blocks joined to each other by a bolted union (6.6), a top block and a bottom block with the bottom one being nearer the vertical support (6.8), leaving the space necessary for the displacement of the hot block (6.2.1) and with said block housing the guides (6.2.2) for displacement of the hot block (6.2.1) and the cylinder (6.2.3) driving it; and with the pressure plate (6.4) with the openings (6.4.1) through which passes the hot block (6.2.1) being fixed to the bottom block.

7. Baling method by means of the baling machine with net cord soldering header according to claims 1 to 6, **characterised in that** firstly the pallet (8) is received in the main revolving platform (1) and the clip (5) holds the end of the net (7) arriving from the roll carriage (3) such that when the platform (1) revolves with the pallet (8) and the clip (5), with vertical displacements of the roll carriage (3), the pallet (8) is wrapped; then the dolly (9) is extended to effect a greater number of turns winding the net (7); after this winding the wheels (3.1.1) approach each other, grouping the net (7) into a cord used for establishing an additional number of turns to stabilise the stacking; after this the cord is held by the clip (5) and the soldering header (6) is extended, facing the pressure plate (6.4) by means of the guidance of the M-shaped bar (6.7); the first mobile body (6.2) of the header (6) moves by the action of the first actuation cylinder (6.5) until the front plate (6.4) presses against the cord (7) and after this the second cylinder (6.2.3) presses the hot block (6.2.1) against the cord (7) through the openings (6.4.1) of the pressure plate (6.4), until the cord (7) is fused; the displacement of the hot block (6.2.1) is accompanied by the cord (7) being cut by the cutter (6.9); this is followed by the removal of the dolly (9), of the hot block (6.2.1) and by an air cooling with the ventilation means (6.4.2); lastly, the mobile body (6.2) of the soldering header and the soldering header (6) itself are removed followed by the pallet (8).

8. Baling method by means of the baling machine with net cord soldering header according to claim 7, **characterised in that** the baling is performed with the platform (1), the clip (5) and the dolly (9) unable to rotate and with the column (2), the roll carriage (3) and the soldering header (6) being provided with a revolving motion, maintaining the same relative motion for baling the pallet (8).
